# EUROPEAN PATENT SPECIFICATION

(11) **EP 1 934 429 B1**
(45) Date of publication and mention of the grant of the patent: **23.05.2018**
(21) Application number: 06783999.3
(22) Date of filing: 18.09.2006
(51) Int. Cl.: E21B 43/20, B01F 1/00, C02F 1/68

(54) **METHOD AND DEVICE FOR DOSING OF CHEMICALS INTO INJECTION WATER**
VERFAHREN UND VORRICHTUNG ZUR EINDOSIERUNG VON CHEMIKALIEN IN EINPRESSWASSER
PROCEDE ET DISPOSITIF DE DOSAGE D'ELEMENTS CHIMIQUES DANS DE L'EAU D'INJECTION

(30) Priority: 23.09.2005 NO 20054410
(43) Date of publication of application: 25.06.2008
(73) Proprietor: SEABOX AS, 4313 Sandnes (NO)
(72) Inventor: PINCHIN, David, N-4085 Hundvåg (NO)
(74) Representative: Håmsø, Gunnar
(86) International application number: PCT/NO2006/000319
(87) International publication number: WO 2007/035107

(56) References cited:
- WO-A1-95/16103
- WO-A1-02/079101
- WO-A1-2004/016904
- WO-A1-2004/090284
- WO-A1-2004/090284
- DE-A1- 3 144 441
- US-A- 4 074 757
- US-A- 4 254 831

## Description

This invention relates to a method for dosing chemicals into injection water. More particularly, it relates to the dosing of chemicals, for example biocides, into injection water for use in an underground reservoir, preferably a petroleum reservoir.

The invention also includes a device for practicing the method.

Often, before injection water is pumped into an underground reservoir, the injection water has to be treated with chemicals, in order to, among other things, prevent bacterial growth in the reservoir.

Failure in the killing of bacteria may lead to acidification of the reservoir, permeability problems in the reservoir, corrosion problems and a gradual build-up of bacterial slime in the reservoir and in the well.

According to the prior art it is common to dose liquid chemicals into the injection water, either continuously or at suitable intervals.

From the Norwegian patent 316918 it is also known to let injection water flow across a water-soluble solid chemical which is placed in a replaceable container. The method and apparatus according to this patent are particularly well suited for use in an injection water treatment plant, the treatment plant possibly being placed on a seabed, for example at a well head.

However, when using this relatively simple process it has turned out that it may be difficult to maintain the desired concentration accuracy of the chemical in the injection water, as the water-solubility of the chemical concerned may vary.

WO 2004/090284 discloses a method and an apparatus for the treatment of water to be injected into a subsea injection well, the apparatus being disposed in water over the well. The features of the preamble of claims 1 and 7 are known from this publication. WO 02/079101 discloses a device for preparing biocide solutions of constant concentrations, where the biocide is dissolved in a controlled and monitored way.

The invention has as its object to remedy or reduce this drawback of the prior art.

The object is achieved in accordance with the invention through the features that are specified in the description below and in the subsequent Claims.

According to a first aspect of the invention there is provided a method of dosing at least one water-soluble chemical of a solid or semisolid form into injection water for use in an underground reservoir, the method comprising the steps of:
- placing a dosing plant device having at least one circulation circuit and chemical tank under water
- circulating water in at least one circulation circuit, in which the water comes into contact with said at least one water-soluble chemical of a solid or semisolid form, wherein the method further comprises the steps of:
- circulating the water in the at least one circulation circuit until the water has reached a desired concentration of the at least one chemical; and
- then dosing the chemical-containing water into the injection water through an ejector.

If it is desirable to dose different types of chemicals into the injection water, water may be circulated in two or more circulation circuits, each containing one type of chemical of a solid or semisolid form. In that case the circulation circuits are preferably arranged in a common dosing plant.

In accordance with the method there may be used, for example, a water-soluble chemical in gel form for at least one chemical, which is to be dissolved and dosed into the injection water.

The water circulating in the circulation circuit and dissolving the chemical of a solid or semisolid form, reaches a known concentration of the chemical in question. Thus, it is relatively simple to dose the desired amount of chemical into the injection water by means of water, which has been treated according to the present method.

If a plant for dosing in accordance with the present method is placed in cold surroundings, for example near a floor of any body of water, in which the water is relatively cold, such as a seabed, the method may also include a step of heating the circulating water to a predetermined temperature. This temperature may be suitable for increasing the dissolution rate of the particular chemical of a solid or semisolid form, and for adjusting the maximum concentration of dissolved chemical in the circulating water. This may also be relevant in connection with a surface-based dosing plant.

Typical examples of generic water treatment chemicals are, in a preferred order:
1. biocides: used for killing bacteria in both air-containing water and water low in air;
2. surface-active substances, so-called surfactants: used for changing the surface properties;
3. scale inhibitors: used as scale-inhibiting agents, and preferably to inhibit scaling in the reservoir;
4. oxygen-removers: used for removing oxygen dissolved in the water;
5. polyelectrolytes: used as filtration-stimulating agents;
6. corrosion inhibitors: used as corrosion-inhibiting agents;
7. emulsion breakers: used for breaking up emulsions of, for example, oil and water;
8. anti froth agents: used to prevent the formation of froth;
9. ferric chloride: used as a filtration-stimulating agent; and
10. chlorine: used as an agent to inhibit the growth of organisms in water containing air, and as a filtration-stimulating agent.

According to the method the at least one chemical of a solid or semisolid form is preferably selected from among the last-mentioned types of generic chemicals.

According to a second aspect of the invention there is provided a plant device for dosing at least one water-soluble chemical of a solid or semisolid form into injection water for use in an underground reservoir. The dosing plant device comprises:
- at least one circulation circuit connected to at least one chemical tank, wherein the circulation circuit (4) and the chemical tank (6) are positioned underwater and the chemical tank being designed to contain a chemical in solid or semisolid form, wherein
the at least one circulation circuit is arranged to communicate, via at least one pipe and associated valves, with a supply line for injection water to said reservoir, wherein the pipe is connected to the supply line via an ejector, such that the chemical containing water is dosed into the injection water.

The dosing plant device may also include two or more circulation circuits, each having connected a chemical tank containing one type of chemical in solid or semisolid form.

If desired, at least one such chemical tank may contain a water-soluble chemical in gel form.

Said valves in a circulation circuit may typically comprise control valves for controlling the dosing rate and dosing times.

With advantage, such a circulation circuit may also be provided with a heating means for the circulating water. Thereby, the circulating water can be heated to increase the dissolution rate of the particular chemical in solid or semisolid form, but also to control the maximum concentration of dissolved chemical in the circulating water.

An underpressure is created in the ejector as the injection water is flowing through the ejector. Thereby, the chemical-containing water is drawn into the supply line for injection into the reservoir.

The invention provides a method and dosing device improving, to a substantial degree, the dosing accuracy of chemicals which are initially chemicals of a solid or semisolid form, for instance in gel form. Dosing plants of this kind may with advantage be placed on the floor of any body of water, for example on a seabed, but such plants are also well suited for use on unmanned installations in general, also on surface-based installations.

In what follows, there is described a non-limiting example of a preferred method and embodiment visualized in the accompanying drawing, in which:

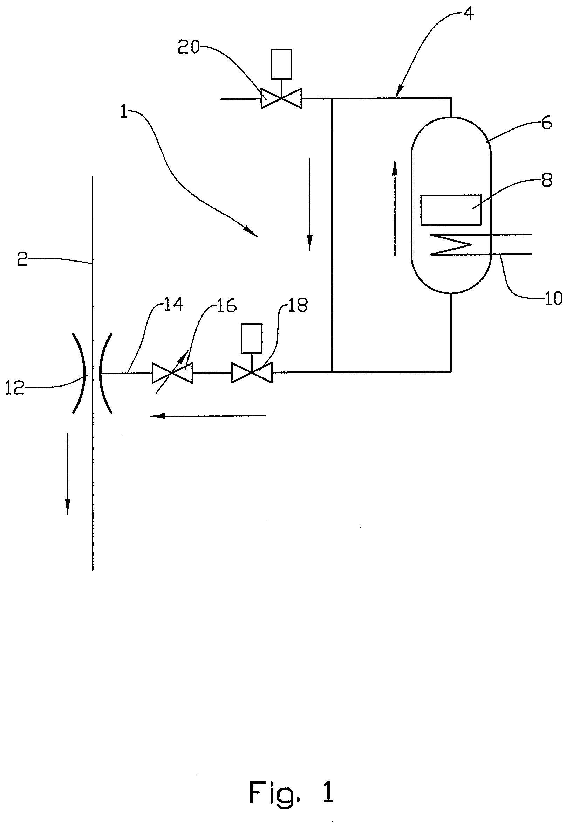

- Figure 1: shows schematically a dosing device according to the invention, arrows indicating the directions of flow.

In the drawing the reference numeral 1 denotes a dosing plant for the dosing of chemicals into a supply line 2 for injection water to an underground petroleum reservoir not shown.

The dosing plant 1 comprises a circulation circuit 4 for water, the circulation circuit 4 being provided with a chemical container 6. The chemical container 6 is designed to accommodate a water-soluble chemical 8 in solid or semisolid form.

Further, the circulation circuit 4 is provided with a heating element 10 so that the temperature of the circulation water may be controlled.

The supply line 2 is provided with an ejector 12 communicating with the circulation circuit 4 through a pipe 14, a quantity control valve 16 and a shut-off valve 18. An underpressure is created in the ejector 12 and thereby in the pipe 14 as injection water is flowing through the supply pipe 2.

Water is supplied to the circulation circuit 4 through a filler valve 20.

Necessary meters, valves and controls in accordance with the prior art known *pre se,* are not shown in the figure.

As water is circulating in the circulation circuit 4, the water repeatedly passes the water-soluble chemical 8. Thereby, the content of the chemical 8 in the water increases until the water reaches a desired concentration or is saturated with the chemical in question. The temperature has been adjusted by means of the heating element 10 to a suitable level to ensure that the chemical 8 has sufficient solubility, and to ensure that the concentration of the chemical 8 in the water is suitable.

The underpressure in the ejector 12 and thereby in the pipe 14, helps water, which has been concentrated up or saturated with the chemical 8, to flow from the circulation circuit 4, via the shut-off valve 18 which is open, via the quantity control valve 16 and the pipe 14 into the ejector 12 and on to the supply pipe 2.

The chemical-containing injection water is then pumped down into the underground reservoir through one or more injection pumps, not shown.

The circulation circuit 4 is topped up with water via the filler valve 20, whereas a new chemical 8 may be provided, for example, by replacing the chemical tank 6 with a new chemical tank, not shown. The replacing of chemical tanks 6 may be carried out, for example, by an underwater vessel (ROV).

If it is desirable to dose different types of chemicals 8 of a solid or semisolid form into the injection water, water may be circulated in several separate circulation circuits 4 (not shown), each containing one type of chemical 8 of a solid or semisolid form, for example in gel form. Thereby, the dosing of each type of chemical 8 may be controlled individually by means of associated and suitable control equipment, preferably in a common dosing plant.

## Claims

1. A method for dosing at least one water-soluble chemical (8) of a solid or semisolid form into injection water for use in an underground reservoir, the method comprising the steps of:
- placing a dosing plant device having at least one circulation circuit (4) and a chemical tank (6) underwater;
- circulating water in at least the one circulation circuit (4) in which the water comes into contact with the at least one water-soluble chemical (8) of a solid or semisolid form, **characterized in that** the method further comprises the steps of:
- circulating the water in the at least one circulation circuit (4) until the water has reached a desired concentration of the at least one chemical (8); and
- then dosing the chemical-containing water into the injection water through an ejector (12).

2. The method according to claim 1, **characterized in that** water is circulated in two or more circulation circuits (4), each containing one type of chemical (8) in solid or semisolid form.

3. The method according to claim 2, **characterized in that** the circulation circuits (4) are arranged in a common dosing plant.

4. The method in accordance with claim 1, 2 or 3, **characterized in that** a water-soluble chemical in gel form is used for at least one chemical, which is to be dissolved and dosed into the injection water.

5. The method in accordance with any one of the preceding claims, **characterized in that** the circulating water is heated to a predetermined temperature.

6. The method in accordance with any one of the preceding claims, **characterized in that** the at least one chemical (8) in solid or semisolid form is selected from among the following types of generic chemicals:
- biocides;
- surfactants;
- scale inhibitors;
- oxygen removers;
- polyelectrolytes;
- corrosion inhibitors;
- emulsion breakers;
- anti froth agents;
- ferric chloride; and
- chlorine.

7. A plant device (1) for dosing at least one water-soluble chemical (8) of a solid or semisolid form into injection water for use in an underground reservoir, the device of the plant (1) comprising:
- at least one circulation circuit (4) connected to at least one chemical tank (6), wherein the circulation circuit (4) and the chemical tank (6) are positioned under water and the chemical tank being designed to contain a chemical (8) in solid or semisolid form,
**characterized in that**
the at least one circulation circuit (4) is arranged to communicate, via at least one pipe (14) and associated valves (16, 18), with a supply line (2) for injection water to said reservoir, wherein the pipe (14) is connected to the supply line (2) via an ejector (12), such that the chemical containing water is dosed into the injection water.

8. The device in accordance with claim 7, **characterized in that** the device comprises two or more circulation circuits (4), each being connected to a chemical tank (6) containing one type of chemical (8) in solid or semisolid form.

9. The device in accordance with claim 7 or 8, **characterized in that** at least one chemical tank (6) contains a water-soluble chemical in gel form.

10. The device in accordance with claim 7, 8 or 9, **characterized in that** the circulation circuit (4) is provided with a heating means (10) for the circulating water.

## Patentansprüche

1. Verfahren zum Dosieren von mindestens einer wasserlöslichen Chemikalie (8) einer festen oder halbfesten Form in Injektionswasser zur Verwendung in einem unterirdischen Speicher, wobei das Verfahren die Schritte umfasst von:
- Platzieren einer Dosieranlagenvorrichtung, welche mindestens einen Zirkulationskreislauf (4) und einen Chemikalienbehälter (6) hat, unter Wasser;
- Zirkulieren von Wasser in zumindest dem einen Zirkulationskreislauf (4), in welchem das Wasser in Kontakt mit der mindestens einen wasserlöslichen Chemikalie (8) einer festen oder halbfesten Form kommt, **dadurch gekennzeichnet, dass** das Verfahren weiter die Schritte umfasst von:
- Zirkulieren des Wassers in dem mindestens einen Zirkulationskreislauf (4), bis das Wasser eine gewünschte Konzentration der mindestens einen Chemikalie (8) erreicht hat; und
- dann Dosieren des Chemikalien-enthaltenden Wassers in das Injektionswasser durch einen Ejektor (12).

2. Verfahren gemäss Anspruch 1, **dadurch gekennzeichnet, dass** Wasser in zwei oder mehr Zirkulationskreisläufen (4) zirkuliert wird, die jeweils eine Art von Chemikalie (8) in fester oder halbfester Form enthalten.

3. Verfahren gemäss Anspruch 2, **dadurch gekennzeichnet, dass** die Zirkulationskreisläufe (4) in einer gemeinsamen Dosieranlage angeordnet sind.

4. Verfahren gemäss Anspruch 1, 2 oder 3, **dadurch gekennzeichnet, dass** eine wasserlösliche Chemikalie in Gel-Form als mindestens eine Chemikalie verwendet wird, die gelöst und in das Injektionswasser dosiert werden soll.

5. Verfahren gemäss einem der vorhergehenden Ansprüche, **dadurch gekennzeichnet, dass** das Zirkulationswasser auf eine vorbestimmte Temperatur erhitzt wird.

6. Verfahren gemäss einem der vorhergehenden Ansprüche, **dadurch gekennzeichnet, dass** die mindestens eine Chemikalie (8) in fester oder halbfester Form aus den folgenden Arten von generischen Chemikalien ausgewählt wird:
- Biozide;
- Tenside;
- Steininhibitoren;
- Sauerstoffentferner;
- Polyelektrolyte;
- Korrosionsinhibitoren;
- Emulsionsspalter;
- Antischaummittel;
- Eisenchlorid; und
- Chlor.

7. Dosieranlagenvorrichtung (1) zum Dosieren von mindestens einer wasserlöslichen Chemikalie (8) einer festen oder halbfesten Form in Injektionswasser zur Verwendung in einem unterirdischen Speicher, wobei die Vorrichtung der Anlage (1) umfasst:
- mindestens einen Zirkulationskreislauf (4), welcher mit mindestens einem Chemikalienbehälter (6) verbunden ist, wobei der Zirkulationskreislauf (4) und der Chemikalienbehälter (6) unter Wasser platziert sind und der Chemikalienbehälter ausgelegt ist, eine Chemikalie (8) in fester oder halbfester Form zu enthalten, **dadurch gekennzeichnet, dass**
der mindestens eine Zirkulationskreislauf (4) derart angeordnet ist, um über mindestens ein Rohr (14) und entsprechende Ventile (16, 18) mit einer Versorgungsleitung (2) für Injektionswasser an besagten Speicher zu kommunizieren, wobei das Rohr (14) über einen Ejektor (12) mit der Versorgungsleitung (2) verbunden ist, so dass das Chemikalien-enthaltende Wasser in das Injektionswasser dosiert wird.

8. Vorrichtung gemäss Anspruch 7, **dadurch gekennzeichnet, dass** die Vorrichtung zwei oder mehr Zirkulationskreisläufe (4) umfasst, die jeweils mit einem Chemikalienbehälter (6) verbunden sind, der eine Art von Chemikalie (8) in fester oder halbfester Form enthält.

9. Vorrichtung gemäss Anspruch 7 oder 8, **dadurch gekennzeichnet, dass** mindestens ein Chemikalienbehälter (6) eine wasserlösliche Chemikalie in Gel-Form enthält.

10. Vorrichtung nach Anspruch 7, 8 oder 9, **dadurch gekennzeichnet, dass** der Zirkulationskreislauf (4) mit einem Heizmittel (10) für das Zirkulationswasser versehen ist.

## Revendications

1. Un procédé permettant de doser au moins une substance chimique soluble dans l'eau (8) de forme solide ou semi-solide, dans de l'eau d'injection destinée à être utilisée dans un réservoir souterrain, le procédé comprenant les étapes de :
- placer un dispositif de station de dosage ayant au moins un circuit de circulation (4) et une cuve à substances chimiques (6) sous l'eau ;
- circuler l'eau dans l'au moins un circuit de circulation (4) dans lequel l'eau vient en contact avec l'au moins une substance chimique soluble dans l'eau (8) de forme solide ou semi-solide,
**caractérisé en ce que** le procédé comprend en outre les étapes de :
- circuler l'eau dans l'au moins un circuit de circulation (4) jusqu'à ce que l'eau a atteint une concentration désirée de l'au moins une substance chimique (8) ; et
- alors doser l'eau contenant la/les substance/s chimique/s dans l'eau d'injection à travers un éjecteur (12).

2. Le procédé selon la revendication 1, **caractérisé en ce que** l'eau est circulé dans deux ou plusieurs circuits de circulation (4), chacun contenant un type de substance chimique (8) de forme solide ou semi-solide.

3. Le procédé selon la revendication 2, **caractérisé en ce que** les circuits de circulation (4) sont disposés dans une station de dosage commune.

4. Le procédé selon la revendication 1, 2 ou 3, **caractérisé en ce que** la substance chimique soluble dans l'eau en forme de gel est utilisée pour au moins une substance chimique, qui est destinée à être dissoute et dosée dans l'eau d'injection.

5. Le procédé selon l'une quelconque des revendications précédentes, **caractérisé en ce que** l'eau de circulation est chauffée à une température prédéterminée.

6. Le procédé selon l'une quelconque des revendications précédentes, **caractérisé en ce qu'**au moins une substance chimique (8) de forme solide ou semi-solide est sélectionnée entre les types de substances chimiques génériques suivantes:
- biocides;
- agents tensio-actifs ;
- agents antitartre ;
- éliminateurs d'oxygène ;
- poly-électrolytes ;
- inhibiteurs de corrosion ;
- agents de rupture d'émulsion ;
- agents anti-moussants ;
- chlorure ferrique; et
- chlore.

7. Un dispositif de station (1) pour doser au moins une substance chimique soluble dans l'eau (8) de forme solide ou semi-solide dans de l'eau d'injection destinée à être utilisée dans un réservoir souterrain, le dispositif de la station (1) comprenant:
- au moins un circuit de circulation (4) relié à au moins une cuve à substances chimiques (6), dans lequel le circuit de circulation (4) et la cuve à substances chimiques (6) sont positionnés sous l'eau et la cuve à substances chimiques étant agencée pour contenir une substance chimique (8) de forme solide ou semi solide,
**caractérisé en ce que**
l'au moins un circuit de circulation (4) est disposé pour communiquer, à travers au moins un tuyau (14) et des soupapes associées (16, 18), avec une ligne d'alimentation (2) en eau d'injection pour le dit réservoir, dans lequel le tuyau (14) est relié à la ligne d'alimentation (2) à travers un éjecteur (12), de sorte que l'eau contenant des substances chimiques est dosée dans l'eau d'injection.

8. Le dispositif selon la revendication 7, **caractérisé en ce que** le dispositif comprend deux ou plusieurs circuits de circulation (4), chacun étant relié à une cuve à substances chimiques (6) contenant un type de substance chimique (8) de forme solide ou semi-solide.

9. Le dispositif selon la revendication 7 ou 8, **caractérisé en ce que** l'au moins une cuve à substances chimiques (6) contient une substance chimique soluble dans l'eau en forme de gel.

10. Le dispositif selon la revendication 7, 8 ou 9, **caractérisé en ce que** le circuit de circulation (4) est pourvu d'un moyen de chauffage (10) pour l'eau de circulation.
